# EUROPEAN PATENT APPLICATION

(11) **EP 3 494 795 A1**
(43) Date of publication of application: **12.06.2019**
(21) Application number: 18202623.7
(22) Date of filing: 25.10.2018
(51) Int. Cl.: A21D 2/36, A21D 8/00, A21D 8/04, A21D 13/32

(54) **METHOD OF MAKING ACORN BREAD**

(30) Priority: 06.12.2017 KR 20170166402
(71) Applicant: Lee, Kwang Mo, Seongnam-si, Gyeonggi-do 13160 (KR)
(72) Inventor: Lee, Kwang Mo, Seongnam-si, Gyeonggi-do 13160 (KR)
(74) Representative: Zardi, Marco

(57) **Abstract**

The present invention provides a method of making acorn bread, including: a raw ingredient preparation step of preparing strong flour, acorn powder, walnut pieces, milk, butter, sugar, salt, and yeast; a mixing step of forming a mixture by heating milk and adding sugar to the milk; a primary kneading step of forming primary dough by mixing the mixture with the strong flour, the acorn powder, the salt, and the yeast; a secondary kneading step of forming secondary dough by mixing the primary dough with the walnut pieces and the butter; a low-temperature fermentation step of fermenting the secondary dough; a division step of dividing the dough; a resting step of resting the dough; a molding step of molding the rested dough; a high-temperature fermentation step of fermenting the molded dough; a processing step of throwing wheat flour onto the dough; and a baking step of baking the dough.

## Description

### BACKGROUND

### 1. Technical Field

The present invention relates to a method of making acorn bread, and more specifically to a method of making acorn bread, which can provide a flavor unique to acorns because acorn powder is contained, which can provide various and rich tastes and textures because walnuts, etc. are contained, and which can promote health because nutrients are abundant.

### 2. Description of the Related Art

In general, acorns are a generic term for the fruits of Fagaceae plants. Acorns have a spherical, oval, or elliptical shape, have various sizes, have hard and smooth shells on the outsides thereof, and each have a single large seed.

Acorns contain aconic acid, and thus it is known that acorns act to absorb heavy metals and various harmful materials in the human body and discharge them from the human body, have an excellent effect on the relief of fatigue and hangover, stimulate appetite by promoting digestive function, stop diarrhea and have intestine enhancing efficacy by enhancing the intestines and the stomach, and are effective in preventing adult diseases such as diabetes.

Acorns have been mainly processed and eaten in the form of Seasoned Acorn Jelly Salads and Acorn Pancakes, and have been used as side dishes or snacks instead of foods. Accordingly, the types of acorn foods that can be eaten are significantly limited despite the various beneficial effects and tastes that acorns have.

As the prior art related to food using acorns, Korean Patent Application Publication No. 10-1992-0007552 (published on October 17, 1992) discloses noodles which use acorns as a main ingredient and which are prepared by mixing 50-70 wt% of acorn powder, obtained by precipitating acorns cut into 4-5 mm pieces in 1-2 degree saline for about 8-12 hours, drying the acorns and grinding the acorns into fine powder, with 30-50 wt% of corn starch, kneading 60-80 wt% of mixture powder along with 20-40 wt% of seaweed soup obtained by boiling seaweed and separating the seaweed, and molding a resulting dough by means of a press-type noodle making machine.

However, the above-described prior art has a problem in that the corn starch and the seaweed are added in addition to the acorn powder, so that a flavor unique to acorns cannot be provided well, and the viscosity and glutinous taste of the noodles are degraded, and the texture of the noodles is poor.

### SUMMARY

The present invention has been conceived to overcome the above-described problems, and an object of the present invention is to provide a method of making acorn bread, which can provide a flavor unique to acorns because acorn powder is contained, which can provide various and rich tastes and textures because walnut pieces are contained in consistent shapes, which can make the structure of the bread uniform, which can make the bread voluminous, which can provide soft and glutinous texture because tensile strength is enhanced, and which can promote health because nutrients are abundant.

In order to accomplish the above object, the present invention provides a method of making acorn bread, the method including: a raw ingredient preparation step of preparing 100 parts by weight of strong flour containing 40% or more of gluten and also preparing, per 100 parts by weight of strong flour, 5-15 parts by weight of acorn powder, 20-30 parts by weight of walnut pieces, 70-80 parts by weight of milk, 10-20 parts by weight of butter, 15-20 parts by weight of sugar, 2-5 parts by weight of salt, and 1-5 parts by weight of yeast; a mixing step of forming a mixture by heating milk to 25-35°C and adding sugar to the milk; a primary kneading step of forming primary dough by mixing the mixture with the strong flour, the acorn powder, the salt, and the yeast; a secondary kneading step of forming secondary dough by mixing the primary dough with the walnut pieces and the butter; a low-temperature fermentation step of fermenting the secondary dough in a fermenter or fermentation room at a temperature of 25-30°C for 0.5-1 hour so that the secondary dough can be raised 1.5-2.5 times; a division step of removing gas from the inside of the primarily fermented dough by pressing or squeezing the dough, making the surface of the dough smooth by rolling the dough, and dividing the dough; a resting step of covering the divided dough with cloth so that the dough does not dry and resting the dough at a temperature of 15-25°C for 10-30 minutes; a molding step of molding the rested dough into a predetermined shape and size by removing gas from the dough and putting the dough into a molding die; a high-temperature fermentation step of fermenting the molded dough in a fermenter or fermentation room at a temperature of 30-38°C for 1-1.5 hours so that the dough can be raised 3-5 times; a processing step of throwing wheat flour onto the surface of the dough, fermented at the high temperature, by means of a sieve and making a plurality of slant cuts in the dough; and a baking step of putting the dough into an oven preheated to 180-230°C and baking the dough for 10-30 minutes.

### BRIEF DESCRIPTION OF THE DRAWINGS

The above and other objects, features and advantages of the present invention will be more clearly understood from the following detailed description taken in conjunction with the accompanying drawings, in which:

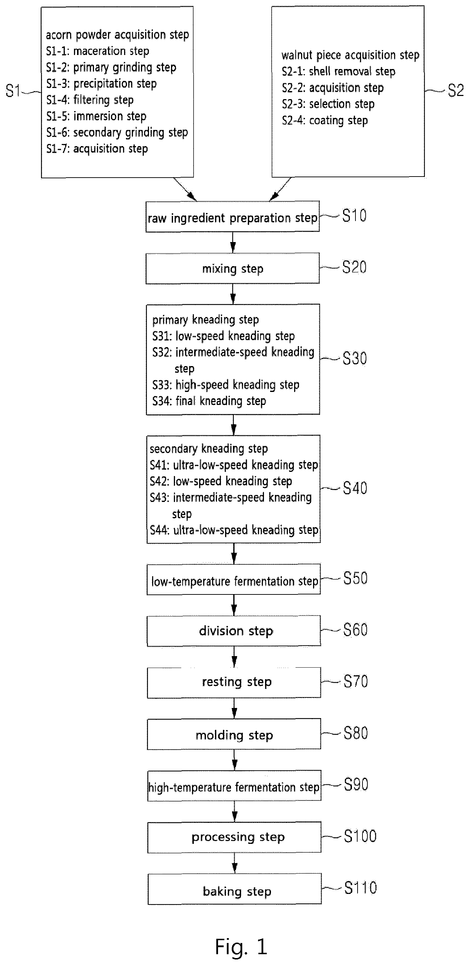

FIG. 1 is a flowchart of a method of making acorn bread according to the present invention.

### DETAILED DESCRIPTION

Specific details required to practice a method of making acorn bread according to the present invention will be described in detail with reference to the accompanying drawing, with a focus on embodiments.

The method of making acorn bread according to the present invention includes a raw ingredient preparation step S10, a mixing step S20, a primary kneading step S30, a secondary kneading step S40, a low-temperature fermentation step S50, a division step S60, a resting step S70, a molding step S80, a high-temperature fermentation step S90, a processing step S100, and a baking step S110.

The raw ingredient preparation step S10 is the step of measuring and preparing 100 parts by weight of strong flour and also measuring and preparing, per 100 parts by weight of strong flour, 5-15 parts by weight of acorn powder, 20-30 parts by weight of walnut pieces, 70-80 parts by weight of milk, 10-20 parts by weight of butter, 15-20 parts by weight of sugar, 2-5 parts by weight of salt, and 1-5 parts by weight of yeast.

Before the raw ingredient preparation step S10, an acorn powder acquisition step S1 and a walnut piece acquisition step S2 may be performed.

The acorn powder acquisition step S1 includes a maceration step S1-1 of removing a tannin component by putting acorns into water and immersing them in water for 3-5 days. Acorns contain a tannin component that generates a bitter taste. A tannin component has the property of being discolored into brown, black, or the like by an enzyme and iron. When the taste and the discoloration are taken into account, it is not desirable that a tannin component is included in bread.

Thereafter, there are performed a primary grinding step Sl-2 of grinding the acorns, macerated in water, by means of a grinder and a precipitation step S1-3 of precipitating white starch powder by putting the ground material into water, macerating the ground material in water, and allowing the white starch powder to escape from the ground material. In this case, when salt is added in the middle of the precipitation step S1-3, the precipitation of starch powder is promoted, thereby reducing precipitation time.

Thereafter, once a white precipitate has been generated, there are performed a filtering step S1-4 of performing filtering by means of a filter cloth such as a piece of cotton cloth, a piece of hemp cloth, or the like, an immersion step S1-5 of allow sediment to be hardened by immersing a filtered solution for a predetermined period, a secondary grinding step S1-6 of grinding the hardened sediment, and an acquisition step S1-7 of acquiring acorn powder by passing the ground material through a sieve.

The walnut piece acquisition step S2 includes: a shell removal step S2-1 of putting walnuts into a shell removal machine and removing the shells of the walnuts; an acquisition step S2-2 of acquiring walnut pieces from the walnuts, from which the shells have been removed, by means of manual work or a walnut crusher; a selection step S2-3 of selecting walnut pieces having a size in the range of 5 to 10 mm from among the acquired walnut pieces in order to enable a person to easily eat them and also enable them to have fine texture; and a coating step S2-4 of coating the surfaces of the walnut pieces with honey by applying honey onto the selected walnut pieces and drying them in a drier in order to enhance the sweat taste of the walnut pieces and prevent them from being broken.

The mixing step S20 is the step of forming a mixture by heating milk to 25-35°C, adding sugar to the milk, and melting the sugar in the milk. In this case, although less than 10 parts by weight of sugar is used per 100 parts by weight of strong flour in common bread making, 15-20 parts by weight of sugar is added per 100 parts by weight of strong flour in order to promote the fermentation of bread ingredients including acorn powder as a main ingredient in the present invention.

The primary kneading step S30 is the step of forming primary dough by putting the mixture, the strong flour, the acorn powder, the salt, and the yeast into a kneader and mixing them together.

By adding the mixture in which milk and sugar are mixed together, the dough becomes watery, soft texture is obtained by mitigating the coarse texture of acorn, and the fermentation of bread ingredient can be promoted.

In this case, the strong flour used is high-quality wheat flour that is rich in protein, particularly in gluten. When more than 11-15 wt% of protein and more than 40 wt% of gluten are contained and kneaded along with water, glutinosity is low. Since the acorn powder has low glutinosity and viscosity, strong flour containing more than 40% of gluten is used in order to mitigate the above-described drawback.

Furthermore, 5-15 parts by weight of acorn powder is added per 100 parts by weight of strong flour. Acorns contain aconic acid, and thus it is known that acorns act to absorb heavy metals and various harmful materials in the human body and discharge them from the human body, have an excellent effect on the relief of fatigue and hangover, stimulate appetite by promoting digestive function, stop diarrhea and have intestine enhancing efficacy by enhancing the intestines and the stomach, and are effective in preventing adult diseases such as diabetes. Therefore, when a person takes in bread containing acorns, the person feels a flavor unique to acorns, and the acorns can help to promote health. When an excessive amount of acorn powder is added, the glutinosity and viscosity of dough may be degraded, and bread may taste stale.

The yeast is bread leaven that is put into wet wheat flour into which nutrients have been infused and causes alcoholic fermentation. The yeast is used to raise bread, and wheat flour and sugar are the food of live yeast. 1-5 parts by weight of live yeast is mixed per 100 parts by weight of strong flour, and sufficiently ferments bread ingredients including acorn powder as a main ingredient. In this case, the live yeast generates a large amount of carbon dioxide, and sufficiently raises bread in the form of a sponge.

The salt inhibits the action of a glutenase, and thus increases the elasticity of gluten, imparts elasticity to the dough, and makes the structure of gluten dense to thus increase gas retention capability, thereby forming voluminous bread. 2-5 parts by weight of salt is added per 100 parts by weight of strong flour, and thus mitigates the coarse property of the acorn powder, imparts elasticity to dough, and sufficiently increases the volume of bread.

Additionally, the primary kneading step S30 requires a kneading step different from that for common bread because acorn powder is added, so that the formation of gluten may be slow and viscoelasticity may be degraded. Kneading temperature causes a fermentation point to differ. In the present invention, the kneading temperature needs to fall within the range of 26 to 30°C. For this purpose, the temperature of water needs to be adjusted to a desired temperature, more preferably 28°C. The mixture, the strong flour, the acorn powder, the yeast, and the salt are put into a kneader first, and then there is performed a low-speed kneading step S31 of performing kneading at a low-speed of 50-100 rpm/minute for 5-10 minutes, thereby enabling the individual ingredients mixed in the mixture to be distributed to thus form a single lump, stably inducing the formation of gluten, and causing viscosity to appear. Thereafter, when there is performed an intermediate-speed kneading step S32 of performing kneading at an intermediate speed of 150-200 rpm/minute for 3-7 minutes, the stickiness of dough disappears gradually, the surface of a dough becomes smooth, and the dough starts to have elasticity and be extended. In this case, a rest may be put in the middle thereof. Furthermore, when there is performed a high-speed kneading step S33 of performing kneading at a high speed of 250-300 rpm/minute for 1-3 minutes, a gluten formation membrane is formed, elasticity and extensibility increase, and the surface of the dough becomes glossy. However, when the speed exceeds 300 rpm/minute or kneading time exceeds three minutes, gluten is damaged, and thus the dough may not be desirably raised. Finally, when there is performed a final kneading step S34 of performing kneading at a low kneader speed of 50-100 rpm/minute for 5-10 minutes, the structure of the dough becomes uniform, and the tensile strength of the dough is enhanced.

The secondary kneading step S40 is the step of forming secondary dough by mixing the primary dough with the walnut pieces and the butter.

The walnuts are nut products, and are a food ingredient rich in unsaturated fatty acid and beneficial for brain health and the prevention of skin aging. The walnuts are rich in linolenic acid and vitamin E, and thus prevent arteriosclerosis and have antioxidative activity. However, since walnut kernels free from shells may be easily acidified soon, it is necessary to prevent walnut pieces from being acidified during bread making. Furthermore, when the primary dough and the walnut pieces are mixed in a kneader, the walnut pieces may be broken due to the collision therebetween, and thus taste and texture may be degraded. Accordingly, it is preferable to use walnut pieces the surfaces of which have been coated with honey.

The butter enables bread to inflate during baking to thus form the volume and structure of the bread by containing air in fat during mixing, improves texture by imparting soft and crispy properties after baking, enables dough to be easily spread by increasing the extensibility of the dough, prevents oxidation, imparts flavor to the bread, and increases storability. Although an amount of butter corresponding to 3% of the amount of wheat flour is generally added, 10-20 parts by weight of butter is added per 100 parts by weight of strong flour in the present invention, which makes the volume and structure of the bread dense by mitigating the coarse property of the acorn powder and also allows the bread to have soft crispy texture.

Furthermore, a bread improver may be added in a small amount as an additive that is added to promote the formation of gluten and improve the texture of dough during bread making. In the present invention, 0.1-1.5 parts by weight of bread improver may be added.

Additionally, at the secondary kneading step S40, the primary dough is mixed with the walnut pieces and the butter to form a mixture, the mixture is put into a kneader, and kneading is performed by sequentially performing an ultra-low-speed kneading step S41 of performing kneading at an ultra-low speed of 10-50 rpm/minute for 10-20 minutes, a low-speed kneading step S42 of performing kneading at a low speed of 50-100 rpm/minute for 5-10 minutes, an intermediate-speed kneading step S43 of performing kneading at an intermediate speed of 150-200 rpm/minute for 3-5 minutes, and an ultra-low-speed kneading step S44 of performing kneading at an ultra-low speed of 10-50 rpm/minute for 10-20 minutes. This is performed at a lower speed than the primary kneading step S30 in order to maintain rich taste and desirable texture by maintaining the walnut pieces within a predetermined size range.

The low-temperature fermentation step S50 is the step of fermenting the secondary dough in a fermenter or fermentation room at a temperature of 25-30°C for 0.5-1 hour so that the secondary dough can be raised 1.5-2.5 times.

At the low-temperature fermentation step S50, a biological reaction is caused by leaven enzyme action. As a main reaction, the volume of the dough is increased due to the generation of carbonic acid gas and alcohol. Due to the generation of organic acid and inorganic acid, pH is decreased, an exothermic reaction occurs, and the flavor of the bread is increased. Gas may be removed during the low-temperature fermentation step to improve the volume of a complete product.

The low temperature fermentation step S50 is performed at a temperature of 25-30°C and a relative humidity of 30-50% for 0.5-1 hour, i.e., at a relatively low temperature for a shorter period of time. Although a relatively humidity is 75-80% during common bread making, the first fermentation is performed at a lower relative humidity of 30-50% in the present invention because a larger amount of moisture is added to the dough and the dough is watery. Accordingly, even when some moisture is lost, the texture of the dough may be adequately maintained. The structure of gluten is made dense. Furthermore, the volume of the bread is increased, and gas retention capacity is increased. Therefore, voluminous bread may be obtained. Furthermore, a larger amount of salt is contained in the dough than in conventional dough, so that the salt retains moisture and thus delays the hardening of the dough.

In this case, it is necessary to accurately check a fermentation point. For this purpose, the dough is pressed with a finger. If a pressed mark remains still, it is determined that normal fermentation has occurred. In this case, in the case where the dough has a light mesh structure and a pressed mark becomes smaller or larger when the surface of the fermented dough is torn and spread with fingers, it is determined that non-fermentation or over-fermentation have occurred. The fermentation point is appropriate when the dough has been raised to a volume that is 1.5 to 2.5 times its original volume.

The division step S60 is the step of removing gas from the inside of the primarily fermented dough by pressing or squeezing the dough, making the surface of the dough smooth by rolling the dough, and dividing the dough. The dough is rapidly divided so that the dough is less damaged, the surface of the divided dough is smoothened by rolling the dough, tension is restored in a relaxed gluten structure, and elasticity is restored by enhancing tensile strength.

The resting step S70 is the step of covering the divided dough with cloth so that the dough does not dry and resting the dough at a temperature of 15-25°C for 10-30 minutes. The dough subjected to the division step S60 needs resting time before molding because the dough has elasticity, and thus the dough has a bench time to rest. In this case, although the resting time varies depending on the type of bread and the strength of rolling, it is preferable to shortly ferment the dough at a temperature of 15-25°C for 10-30 minutes. A resting place is preferably a fermentation room or a workbench where a change in temperature is small, and the surface of the dough is prevented from being dried during the rest. Since the dough is continuously fermented through the dormant step S70, extensibility is restored again.

The molding step S80 is the step of molding the rested dough into a predetermined shape and size by removing gas from the dough and putting the dough into a molding die. Gas is removed from the dough by using a roller. If gas is not removed from the dough, the dough may be excessively raised when bread is baked, and the quality of a product may be degraded because pores inside the bread may not be uniform. Furthermore, depending on the strength of molding, fermentation time may be influenced, and expansion force may be influenced when baking.

The high-temperature fermentation step S90 is the step of fermenting the molded dough in a fermenter or fermentation room at a temperature of 30-38°C for 1-1.5 hours so that the dough can be raised 3-5 times.

The high-temperature fermentation step S90 may be performed at a temperature of 30-38°C and a relative humidity of 30-50% for 1-1.5 hours. Fermentation is performed at a higher temperature for a longer time than the primary fermentation step S60, and thus high-temperature fermentation is performed, thereby further improving the texture and flavor of the bread. Furthermore, although a relative humidity is 75-80% in the fermentation of common bread making, high-temperature fermentation is performed at a lower relative humidity of 30-50% in the present invention because a large amount of moisture is added to the dough and the dough is watery. Accordingly, an excessive amount of moisture is prevented from being included, and the texture of the dough is appropriately maintained even when some moisture is lost. As a result, the structure of gluten is made dense, the volume of the dough is increased, and gas retention capacity is increased, thereby forming voluminous bread. Additionally, the dough contains a larger amount of salt than that in common bread making, and thus the salt retains moisture and delays the hardening of the dough.

The processing step S100 is the step of throwing wheat flour onto the surface of the dough, fermented at the high temperature, by means of a sieve and making a plurality of slant cuts in the dough.

The baking step S110 is the step of putting the dough into an oven preheated to 180-230°C and baking the dough for 10-30 minutes. At the baking step S110, baking is preferably performed at a temperature of 180-230°C for 10-30 minutes. When baking temperature is lower than 180°C, a problem occurs in that the dough may not be uniformly baked. In contrast, when baking temperature is higher than 230°C, a problem occurs in that the surface of the dough may be burnt.

Furthermore, after the baking step S110, there may be included a mixed cream filling step S120 of cooling the baked bread at room temperature, separating the cooled bread into upper and lower parts by cutting it in a horizontal direction, and filling the space between the upper and lower parts with mixed cream.

The mixed cream is prepared by preparing 40-60 wt% of custard cream, 5-10 wt% of refined sugar, 15-25 wt% of chopped sweet potatoes, 15-25 wt% of chopped chestnuts, and 0.1-0.5 wt% of sodium alginate, mixing the custard cream with the refined sugar and the sodium alginate to form a mixture by means of a mixer, and mixing the mixture with the chopped sweet potatoes and the chopped chestnuts by means of a mixer.

The custard cream is prepared by putting and boiling milk into and in a pan, stirring egg yolks and sugar in another pan until they are bubbled, adding wheat flour and cone starch, slowly pouring previously boiled milk and sufficiently boiling the milk over low heat, adding butter and spice, and stirring the ingredients with a wooden paddle.

It is known that sweet potatoes have more saccharinity, more vitamin C and lower calories than potatoes. Furthermore, it is known that chestnuts are beneficial to development and growth because they contain protein, carbohydrate, fat, vitamins A, B and C, and calcium, are rich in vitamin C, have antioxidative activity because they contain carotenoid, and are effective in promoting skin beauty, overcoming fatigue, and enhancing gastrointestinal function.

By chopping and adding such sweet potatoes and chestnuts, various and rich flavors and textures may be imparted, and the nutrients of bread may be enriched, thereby promoting health.

As a result, in accordance with the method of making acorn bread according to the present invention, a flavor unique to acorns can be provided because acorn powder is contained, various and rich tastes and textures can be provided because walnut pieces are contained in consistent shapes, the structure of the bread is uniform, the bread is voluminous, soft and glutinous texture can be provided because tensile strength is enhanced, and health can be promoted because nutrients are abundant.

The embodiments of the present invention are merely examples, and thus the present invention is not limited to the embodiments. Anything that has substantially the same configuration and exhibits the same operational effect as the technical spirit described in the claims of the present invention is included in the technical range of the present invention.

## Claims

1. A method of making acorn bread, the method comprising:
a raw ingredient preparation step of preparing 100 parts by weight of strong flour containing 40% or more of gluten and also preparing, per 100 parts by weight of strong flour, 5-15 parts by weight of acorn powder, 20-30 parts by weight of walnut pieces, 70-80 parts by weight of milk, 10-20 parts by weight of butter, 15-20 parts by weight of sugar, 2-5 parts by weight of salt, and 1-5 parts by weight of yeast; a mixing step of forming a mixture by heating milk to 25-35°C and adding sugar to the milk; a primary kneading step of forming primary dough by mixing the mixture with the strong flour, the acorn powder, the salt, and the yeast; a secondary kneading step of forming secondary dough by mixing the primary dough with the walnut pieces and the butter; a low-temperature fermentation step of fermenting the secondary dough in a fermenter or fermentation room at a temperature of 25-30°C for 0.5-1 hour so that the secondary dough can be raised 1.5-2.5 times; a division step of removing gas from an inside of the primarily fermented dough by pressing or squeezing the dough, making the surface of the dough smooth by rolling the dough, and dividing the dough; a resting step of covering the divided dough with cloth so that the dough does not dry and resting the dough at a temperature of 15-25°C for 10-30 minutes; a molding step of molding the rested dough into a predetermined shape and size by removing gas from the dough and putting the dough into a molding die; a high-temperature fermentation step of fermenting the molded dough in a fermenter or fermentation room at a temperature of 30-38°C for 1-1.5 hours so that the dough can be raised 3-5 times; a processing step of throwing wheat flour onto a surface of the dough, fermented at the high temperature, by means of a sieve and making a plurality of slant cuts in the dough; and a baking step of putting the dough into an oven preheated to 180-230°C and baking the dough for 10-30 minutes;
wherein an acorn powder acquisition step and a walnut piece acquisition step are performed before the raw ingredient preparation step;
wherein the acorn powder acquisition step comprises: a maceration step of removing a tannin component by putting acorns into water and immersing them in water for 3-5 days; a primary grinding step of grinding the macerated acorns by means of a grinder; a precipitation step of precipitating starch powder by putting the ground material into water, macerating the ground material in water, and adding salt; a filtering step, once a white precipitate has been generated, performing filtering by means of a filter cloth; an immersion step of allowing sediment to be hardened by immersing a filtered solution for a predetermined period; a secondary grinding step of grinding the hardened sediment; and an acquisition step of acquiring acorn powder by passing the ground material through a sieve;
wherein the walnut piece acquisition step is performed by removing shells from walnuts, acquiring walnut pieces from the walnuts, from which the shells have been removed, by means of manual work or a walnut crusher, selecting walnut pieces having a size in a range of 5 to 10 mm from among the acquired walnut pieces, and coating surfaces of the walnut pieces with honey by applying honey onto the selected walnut pieces and drying them in a drier in order to enhance the sweat taste of the walnut pieces and prevent them from being broken;
wherein the primary kneading step is performed by mixing the mixture, the strong flour, the acorn powder, the salt, and the yeast to form a mixture, putting the mixture into a kneader, and performing kneading by sequentially performing a step of performing kneading at a low speed of 50-100 rpm/minutes for 5-10 minutes, a step of performing kneading at an intermediate speed of 150-200 rpm/minutes for 3-5 minutes, a step of performing kneading at a high speed of 250-300 rpm/minutes for 1-3 minutes, and a step of performing kneading at a low speed of 50-100 rpm/minutes for 5-10 minutes; and
wherein the secondary kneading step is performed by mixing the primary dough with the walnut pieces and the butter to form a mixture, putting the mixture into a kneader, and performing kneading by sequentially performing a step of performing kneading at an ultra-low speed of 10-50 rpm/minute for 10-20 minutes, a step of performing kneading at a low speed of 50-100 rpm/minute for 5-10 minutes, a step of performing kneading at an intermediate speed of 150-200 rpm/minute for 3-5 minutes, and a step of performing kneading at an ultra-low speed of 10-50 rpm/minute for 10-20 minutes.

2. The method of claim 1, further comprising, after the baking step, a mixed cream filling step of separating the baked dough into upper and lower parts by cutting it in a horizontal direction, and filling a space between the upper and lower parts with mixed cream;
wherein the mixed cream is prepared by preparing 40-60 wt% of custard cream, 5-10 wt% of refined sugar, 15-25 wt% of chopped sweet potatoes, 15-25 wt% of chopped chestnuts, and 0.1-0.5 wt% of sodium alginate, mixing the custard cream with the refined sugar and the sodium alginate to form a mixture, and mixing the mixture with the chopped sweet potatoes and the chopped chestnuts.
